# EUROPEAN PATENT APPLICATION

(11) **EP 4 529 332 A1**
(43) Date of publication of application: **26.03.2025**
(21) Application number: 24184324.2
(22) Date of filing: 25.06.2024
(51) Int. Cl.: H04W 72/40, H04W 72/02

(54) **APPARATUS, METHOD, AND COMPUTER PROGRAM**

(30) Priority: 19.09.2023 GB 202314300
(71) Applicant: Nokia Technologies Oy, 02610 Espoo (FI)
(72) Inventor: VAN PHAN, Vinh, 90100 OULU (FI); JACOBSEN, Thomas Haaning, 9400 NØRRESUNDBY (DK); WILDSCHEK, Torsten, GLOUCESTER, GL4 5TW (GB); YU, Ling, 02700 KAUNIAINEN (FI); BUTHLER, Jakob Lindbjerg, 9000 AALBORG (DK)
(74) Representative: Page White Farrer

(57) **Abstract**

The disclosure relates to an apparatus configured to: select (500) a first slot and a second slot for sidelink transmissions via a first radio access technology, wherein the first slot and the second slot overlap with a subframe for sidelink transmissions via a second radio access technology, wherein the first slot and the second slot are associated with at least one transmission requirement; generate (502) a first transport block associated with at least one first transport block requirement and a second transport block associated with at least one second transport block requirement; determine (504) to transmit at least one of the first transport block or the second transport block over at least the first slot based on the at least one transmission requirement, the at least one first transport block requirement and the at least one second transport block requirement; and transmit (506) at least one of the first transport block or the second transport block over at least the first slot.

## Description

### Field of the disclosure

The present disclosure relates to an apparatus, a method, and a computer program for managing coexistence between sidelink transmissions over a first radio access technology (e.g. 5G) and sidelink transmissions over a second radio access technology (e.g. LTE).

### Background

A communication system can be seen as a facility that enables communication sessions between two or more entities such as communication devices, base stations and/or other nodes by providing carriers between the various entities involved in the communications path.

The communication system may be a wireless communication system. Examples of wireless systems comprise public land mobile networks (PLMN) operating based on radio standards such as those provided by 3GPP, satellite based communication systems and different wireless local networks, for example wireless local area networks (WLAN). The wireless systems can typically be divided into cells, and are therefore often referred to as cellular systems.

The communication system and associated devices typically operate in accordance with a given standard or specification which sets out what the various entities associated with the system are permitted to do and how that should be achieved. Communication protocols and/or parameters which shall be used for the connection are also typically defined. Examples of standard are the so-called 5G standards.

### Summary

According to an aspect there is provided an apparatus comprising at least one processor and at least one memory storing instructions that, when executed by the at least one processor, cause the apparatus at least to: select a first slot and a second slot for sidelink transmissions via a first radio access technology, wherein the first slot and the second slot overlap with a subframe for sidelink transmissions via a second radio access technology, wherein the first slot and the second slot are associated with at least one transmission requirement; generate a first transport block associated with at least one first transport block requirement and a second transport block associated with at least one second transport block requirement; determine to transmit at least one of the first transport block or the second transport block over at least the first slot based on the at least one transmission requirement, the at least one first transport block requirement and the at least one second transport block requirement; and transmit at least one of the first transport block or the second transport block over at least the first slot.

Transmitting at least one of the first transport block or the second transport block over at least the first slot may comprise: transmitting the first transport block over the first slot and transmitting the second transport block over the second slot; transmitting the first transport block over the first slot and not transmitting the second transport block over the second slot; transmitting the first transport block over the first slot and the second slot (i.e. transmitting the first transport block over the first slot and retransmitting or duplicating the first transport block over the second slot); transmitting the second transport block over the first slot and transmitting the first transport block over the second slot; transmitting the second transport block over the first slot and not transmitting the first transport block over the second slot; or transmitting the second transport block over the first slot and the second slot (i.e. transmitting the second transport block over the first slot and retransmitting or duplicating the second transport block over the second slot).

The at least one transmission requirement may comprise at least one of: transmitting over the second slot is allowed if transmitting over the first slot; or transmitting over the second slot is allowed if a transmission power over the second slot is lower than or equal to a transmission power over the first slot.

The at least one first transport block requirement may comprise at least one of a first casting requirement, a first priority requirement, a first reliability requirement, a first transmission power requirement or a first latency requirement; and wherein the at least one second transport block requirement comprises at least one of a second casting requirement, a second priority requirement, a second reliability requirement, a second transmission power requirement or a second latency requirement.

The at least one first transport block requirement and the at least one second transport block requirement may comprise the same transport block requirement or may comprise different transport block requirements.

A casting requirement may comprise a unicast requirement, a groupcast requirement or a broadcast requirement.

The first transport block and the second transport block may be generated for a same service or for different services.

A service may refer to a connection or traffic flow between a source identifier and a destination identifier.

The at least one memory may store instructions that, when executed by the at least one processor, cause the apparatus at least to: generate a first transport block associated with a first priority requirement and a second transport block associated with a second priority requirement, wherein the first priority requirement is greater than the second priority requirement; determine congestion over the first slot and the second slot; determine to transmit the first transport block over the first slot or over the first slot and the second slot based on the at least one transmission requirement, the first priority requirement, the second priority requirement and the congestion over the first slot and the second slot; and transmit the first transport block over the first slot or over the first slot and the second slot.

The at least one memory stores instructions that, when executed by the at least one processor, cause the apparatus at least to: determine that the congestion over the first slot and the second slot is lower than a congestion threshold and greater than another congestion threshold.

The congestion threshold is first threshold corresponding to the first priority requirement and the other congestion threshold is a second threshold corresponding to the second priority requirement.

The first priority requirement may be determined based on the lowest priority of a data packet comprised in the first transport block; and the second priority requirement may be determined based on the greatest priority of a data packet comprised in the second transport block.

The at least one memory may store instructions that, when executed by the at least one processor, cause the apparatus at least to: generate a first transport block associated with a first transmission power requirement and a second transport block associated with a second transmission power requirement, wherein the second transmission power requirement is lower than the first transmission power requirement; determine to transmit the first transport block over the first slot and the second transport block over the second slot based on the at least one transmission requirement, the first transmission power requirement and the second transmission power requirement; and transmit the first transport block over the first slot and the second transport block over the second slot.

The at least one memory may store instructions that, when executed by the at least one processor, cause the apparatus at least to: generate a first transport block associated with a first casting requirement and a second transport block associated with a second casting requirement, wherein the first casting requirement is a groupcast requirement or a broadcast requirement and the second casting requirement is a unicast requirement; determine to transmit the first transport block over the first slot and the second transport block over the second slot based on the at least one transmission requirement, the first casting requirement and the second casting requirement; and transmit the first transport block over the first slot and the second transport block over the second slot.

The at least one memory may store instructions that, when executed by the at least one processor, cause the apparatus at least to: generate a first transport block associated with a first transport block requirement and a second transport block associated with a second transport block requirement; determine to not transmit the second transport block over the first slot or the second slot based on the at least one transmission requirement, the first transport block requirement and the second transport block requirement; determine to transmit the first transport block over the first slot and the second slot based on the at least one transmission requirement, the first transport block requirement and the second transport block requirement; and transmit the first transport block over the first slot and the second slot.

The at least one memory may store instructions that, when executed by the at least one processor, cause the apparatus at least to: generate a first transport block associated with a first transmission power requirement greater than a transmission power threshold; determine to transmit the first transport block over the first slot and the second slot based on the at least one transmission requirement and the first transmission power requirement; and transmit the first transport block over the first slot and the second slot.

The at least one memory may store instructions that, when executed by the at least one processor, cause the apparatus at least to: generate a first transport block associated with a first casting requirement, wherein the first casting requirement is a unicast requirement; determine to transmit the first transport block over the first slot and the second slot based on the at least one transmission requirement and the first casting requirement; and transmit the first transport block over the first slot and the second slot.

The at least one memory may store instructions that, when executed by the at least one processor, cause the apparatus at least to: transmit an indication that hybrid automatic repeat request with feedback is enabled for the transmission of the first transport block over the first slot, wherein the feedback is based on a reception status of the transmission of the first transport block over the first slot; transmit the first transport block over the first slot using a hybrid automatic repeat request process; transmit an indication that hybrid automatic repeat request with feedback is enabled for the transmission of the first transport block over the second slot, wherein the feedback is based on a reception status of the transmission of the first transport block over the second slot; and transmit the first transport block over the second slot using another hybrid automatic repeat request process.

The hybrid automatic repeat request process may be stopped in response to receiving an acknowledgement for the transmission of the first transport block over the first slot or in response to the other hybrid automatic repeat request process being stopped; or the other hybrid automatic repeat request process may be stopped in response to receiving an acknowledgement for the transmission of the first transport block over the second slot or in response to the hybrid automatic repeat request process being stopped.

The at least one memory may store instructions that, when executed by the at least one processor, cause the apparatus at least to: transmit an indication that hybrid automatic repeat request with feedback is enabled for the transmission of the first transport block over the first slot, wherein the feedback is based on a reception status of the transmission of the first transport block over the first slot; transmit the first transport block over the first slot using a hybrid automatic repeat request process; transmit an indication that hybrid automatic repeat request with feedback is disabled for the transmission of the first transport block over the second slot; and transmit the first transport block over the second slot using another hybrid automatic repeat request process.

The hybrid automatic repeat request process may be stopped in response to receiving an acknowledgement for the transmission of the first transport block over the first slot or in response to the other hybrid automatic repeat request process being stopped; or the other hybrid automatic repeat request process may be stopped in response to the hybrid automatic repeat request process being stopped or in response to reaching a configured number of retransmissions for the other hybrid automatic repeat request process.

The at least one memory may store instructions that, when executed by the at least one processor, cause the apparatus at least to: transmit an indication that a hybrid automatic repeat request with feedback is enabled for the transmission of the first transport block over the first slot, wherein the feedback is based on a reception status of the transmission of the first transport block over the first slot and the transmission of the first transport block over the second slot; transmit the first transport block over the first slot using a hybrid automatic repeat request process; transmit an indication that hybrid automatic repeat request with feedback is disabled for the transmission of the first transport block over the second slot; and transmit the first transport block over the second slot using the same hybrid automatic repeat request process.

The hybrid automatic repeat request process may be stopped in response to receiving an acknowledgement for the transmission of the first transport block over the first slot or the transmission of the first transport block over the second slot.

The apparatus may be a user equipment.

The user equipment may operate in FR1.

The user equipment may operate with a 30kHz subcarrier spacing.

The first radio access technology may be 5G.

The second radio access technology may be LTE.

According to an aspect there is provided an apparatus comprising means for: selecting a first slot and a second slot for sidelink transmissions via a first radio access technology, wherein the first slot and the second slot overlap with a subframe for sidelink transmissions via a second radio access technology, wherein the first slot and the second slot are associated with at least one transmission requirement; generating a first transport block associated with at least one first transport block requirement and a second transport block associated with at least one second transport block requirement; determining to transmit at least one of the first transport block or the second transport block over at least the first slot based on the at least one transmission requirement, the at least one first transport block requirement and the at least one second transport block requirement; and transmitting at least one of the first transport block or the second transport block over at least the first slot

According to an aspect there is provided an apparatus comprising circuitry configured to: select a first slot and a second slot for sidelink transmissions via a first radio access technology, wherein the first slot and the second slot overlap with a subframe for sidelink transmissions via a second radio access technology, wherein the first slot and the second slot are associated with at least one transmission requirement; generate a first transport block associated with at least one first transport block requirement and a second transport block associated with at least one second transport block requirement; determine to transmit at least one of the first transport block or the second transport block over at least the first slot based on the at least one transmission requirement, the at least one first transport block requirement and the at least one second transport block requirement; and transmit at least one of the first transport block or the second transport block over at least the first slot.
According to an aspect there is provided a method comprising: selecting a first slot and a second slot for sidelink transmissions via a first radio access technology, wherein the first slot and the second slot overlap with a subframe for sidelink transmissions via a second radio access technology, wherein the first slot and the second slot are associated with at least one transmission requirement; generating a first transport block associated with at least one first transport block requirement and a second transport block associated with at least one second transport block requirement; determining to transmit at least one of the first transport block or the second transport block over at least the first slot based on the at least one transmission requirement, the at least one first transport block requirement and the at least one second transport block requirement; and transmitting at least one of the first transport block or the second transport block over at least the first slot.

Transmitting at least one of the first transport block or the second transport block over at least the first slot may comprise: transmitting the first transport block over the first slot and transmitting the second transport block over the second slot; transmitting the first transport block over the first slot and not transmitting the second transport block over the second slot; transmitting the first transport block over the first slot and the second slot (i.e. transmitting the first transport block over the first slot and retransmitting or duplicating the first transport block over the second slot); transmitting the second transport block over the first slot and transmitting the first transport block over the second slot; transmitting the second transport block over the first slot and not transmitting the first transport block over the second slot; or transmitting the second transport block over the first slot and the second slot (i.e. transmitting the second transport block over the first slot and retransmitting or duplicating the second transport block over the second slot).

The at least one transmission requirement may comprise at least one of: transmitting over the second slot is allowed if transmitting over the first slot; or transmitting over the second slot is allowed if a transmission power over the second slot is lower than or equal to a transmission power over the first slot.

The at least one first transport block requirement may comprise at least one of a first casting requirement, a first priority requirement, a first reliability requirement, a first transmission power requirement or a first latency requirement; and wherein the at least one second transport block requirement comprises at least one of a second casting requirement, a second priority requirement, a second reliability requirement, a second transmission power requirement or a second latency requirement.

The at least one first transport block requirement and the at least one second transport block requirement may comprise the same transport block requirement or may comprise different transport block requirements.

A casting requirement may comprise a unicast requirement, a groupcast requirement or a broadcast requirement.

The first transport block and the second transport block may be generated for a same service or for different services.

A service may refer to a connection or traffic flow between a source identifier and a destination identifier.

The method may comprise: generating a first transport block associated with a first priority requirement and a second transport block associated with a second priority requirement, wherein the first priority requirement is greater than the second priority requirement; determining congestion over the first slot and the second slot; determining to transmit the first transport block over the first slot or over the first slot and the second slot based on the at least one transmission requirement, the first priority requirement, the second priority requirement and the congestion over the first slot and the second slot; and transmitting the first transport block over the first slot or over the first slot and the second slot.

The method may comprise: determining that the congestion over the first slot and the second slot is lower than a congestion threshold and greater than another congestion threshold.

The congestion threshold is first threshold corresponding to the first priority requirement and the other congestion threshold is a second threshold corresponding to the second priority requirement.

The first priority requirement may be determined based on the lowest priority of a data packet comprised in the first transport block; and the second priority requirement may be determined based on the greatest priority of a data packet comprised in the second transport block.

The method may comprise: generating a first transport block associated with a first transmission power requirement and a second transport block associated with a second transmission power requirement, wherein the second transmission power requirement is lower than the first transmission power requirement; determining to transmit the first transport block over the first slot and the second transport block over the second slot based on the at least one transmission requirement, the first transmission power requirement and the second transmission power requirement; and transmitting the first transport block over the first slot and the second transport block over the second slot.

The method may comprise: generating a first transport block associated with a first casting requirement and a second transport block associated with a second casting requirement, wherein the first casting requirement is a groupcast requirement or a broadcast requirement and the second casting requirement is a unicast requirement; determining to transmit the first transport block over the first slot and the second transport block over the second slot based on the at least one transmission requirement, the first casting requirement and the second casting requirement; and transmitting the first transport block over the first slot and the second transport block over the second slot.

The method may comprise: generating a first transport block associated with a first transport block requirement and a second transport block associated with a second transport block requirement; determining to not transmit the second transport block over the first slot or the second slot based on the at least one transmission requirement, the first transport block requirement and the second transport block requirement; determining to transmit the first transport block over the first slot and the second slot based on the at least one transmission requirement, the first transport block requirement and the second transport block requirement; and transmitting the first transport block over the first slot and the second slot.

The method may comprise: generating a first transport block associated with a first transmission power requirement greater than a transmission power threshold; determining to transmit the first transport block over the first slot and the second slot based on the at least one transmission requirement and the first transmission power requirement; and transmitting the first transport block over the first slot and the second slot.

The method may comprise: generating a first transport block associated with a first casting requirement, wherein the first casting requirement is a unicast requirement; determining to transmit the first transport block over the first slot and the second slot based on the at least one transmission requirement and the first casting requirement; and transmitting the first transport block over the first slot and the second slot.

The method may comprise: transmitting an indication that hybrid automatic repeat request with feedback is enabled for the transmission of the first transport block over the first slot, wherein the feedback is based on a reception status of the transmission of the first transport block over the first slot; transmitting the first transport block over the first slot using a hybrid automatic repeat request process; transmitting an indication that hybrid automatic repeat request with feedback is enabled for the transmission of the first transport block over the second slot, wherein the feedback is based on a reception status of the transmission of the first transport block over the second slot; and transmitting the first transport block over the second slot using another hybrid automatic repeat request process.

The hybrid automatic repeat request process may be stopped in response to receiving an acknowledgement for the transmission of the first transport block over the first slot or in response to the other hybrid automatic repeat request process being stopped; or the other hybrid automatic repeat request process may be stopped in response to receiving an acknowledgement for the transmission of the first transport block over the second slot or in response to the hybrid automatic repeat request process being stopped.

The method may comprise: transmitting an indication that hybrid automatic repeat request with feedback is enabled for the transmission of the first transport block over the first slot, wherein the feedback is based on a reception status of the transmission of the first transport block over the first slot; transmitting the first transport block over the first slot using a hybrid automatic repeat request process; transmitting an indication that hybrid automatic repeat request with feedback is disabled for the transmission of the first transport block over the second slot; and transmitting the first transport block over the second slot using another hybrid automatic repeat request process.

The hybrid automatic repeat request process may be stopped in response to receiving an acknowledgement for the transmission of the first transport block over the first slot or in response to the other hybrid automatic repeat request process being stopped; or the other hybrid automatic repeat request process may be stopped in response to the hybrid automatic repeat request process being stopped or in response to reaching a configured number of retransmissions for the other hybrid automatic repeat request process.

The method may comprise: transmitting an indication that a hybrid automatic repeat request with feedback is enabled for the transmission of the first transport block over the first slot, wherein the feedback is based on a reception status of the transmission of the first transport block over the first slot and the transmission of the first transport block over the second slot; transmit the first transport block over the first slot using a hybrid automatic repeat request process; transmitting an indication that hybrid automatic repeat request with feedback is disabled for the transmission of the first transport block over the second slot; and transmitting the first transport block over the second slot using the same hybrid automatic repeat request process.

The hybrid automatic repeat request process may be stopped in response to receiving an acknowledgement for the transmission of the first transport block over the first slot or the transmission of the first transport block over the second slot.

The method may be performed by an apparatus.

The apparatus may be a user equipment.

The user equipment may operate in FR1.

The user equipment may operate with a 30kHz subcarrier spacing.

The first radio access technology may be 5G.

The second radio access technology may be LTE.

According to an aspect there is provided a computer program comprising computer executable code which when run on at least one processor is configured to: select a first slot and a second slot for sidelink transmissions via a first radio access technology, wherein the first slot and the second slot overlap with a subframe for sidelink transmissions via a second radio access technology, wherein the first slot and the second slot are associated with at least one transmission requirement; generate a first transport block associated with at least one first transport block requirement and a second transport block associated with at least one second transport block requirement; determine to transmit at least one of the first transport block or the second transport block over at least the first slot based on the at least one transmission requirement, the at least one first transport block requirement and the at least one second transport block requirement; and transmit at least one of the first transport block or the second transport block over at least the first slot.

According to an aspect, there is provided a computer readable medium comprising program instructions stored thereon for performing at least one of the above methods.

According to an aspect, there is provided a non-transitory computer readable medium comprising program instructions stored thereon for performing at least one of the above methods.

According to an aspect, there is provided a non-volatile tangible memory medium comprising program instructions stored thereon for performing at least one of the above methods.

In the above, many different aspects have been described. It should be appreciated that further aspects may be provided by the combination of any two or more of the aspects described above.

Various other aspects are also described in the following detailed description and in the attached claims.

### List of abbreviations

- AF:: Application Function
- AGC:: Automatic Gain Control
- Al:: Artificial Intelligence
- AMF:: Access and Mobility Management Function
- API:: Application Programming Interface
- BS:: Base Station
- CU:: Centralized Unit
- DL:: Downlink
- DU:: Distributed Unit
- gNB:: gNodeB
- GSM:: Global System for Mobile communication
- HARQ:: Hybrid Automatic Repeat reQuest
- HSS:: Home Subscriber Server
- IE:: Information Element
- loT:: Internet of Things
- LMF:: Location Management Function
- LPP:: Location Positioning Protocol
- LTE:: Long Term Evolution
- MAC:: Medium Access Control
- ML:: Machine Learning
- MS:: Mobile Station
- MTC:: Machine Type Communication
- NEF:: Network Exposure Function
- NF:: Network Function
- NR:: New radio
- NRF:: Network Repository Function
- PDCP:: Packet Data convergence Protocol
- PDU:: Packet Data Unit
- PSCCH:: Physical Sidelink Control Channel
- PSFCH:: Physical Sidelink Feedback Channel
- PSSCH:: Physical Sidelink Shared Channel
- RAM:: Random Access Memory
- (R)AN:: (Radio) Access Network
- RLC:: Radio Link Control
- ROM:: Read Only Memory
- RX:: Receiving
- SCI:: Sidelink Control Information
- SCS:: Subcarrier Spacing
- SINR:: Signal to Interference plus Noise Ratio
- SMF:: Session Management Function
- SN:: Sequence Number
- SNR:: Signal to noise ratio
- TB:: Transport Block
- TR:: Technical Report
- TS:: Technical Specification
- TX:: Transmitting
- UE:: User Equipment
- UM:: Unacknowledgement Mode
- UMTS:: Universal Mobile Telecommunication System
- 3GPP:: 3^{rd} Generation Partnership Project
- 5G:: 5^{th} Generation
- 5GC:: 5G Core network
- 5GS:: 5G System

### Brief Description of the Figures

Embodiments will now be described, by way of example only, with reference to the accompanying Figures in which:
Fig. 1 shows a schematic representation of a 5G system;
Fig. 2 shows a schematic representation of a control apparatus;
Fig. 3 shows a schematic representation of a user equipment;
Fig. 4 shows a schematic representation of a slot 1 and a slot 2 overlapping with an LTE subframe;
Fig. 5 shows a block diagram of a method for managing coexistence between sidelink transmissions over a first radio access technology (e.g. 5G) and sidelink transmissions over a second radio access technology (e.g. LTE); and
Fig. 6 shows a signaling diagram of a process for managing coexistence between sidelink transmissions over a first radio access technology (e.g. 5G) and sidelink transmissions over a second radio access technology (e.g. LTE);
Fig. 7 shows a signaling diagram of another process for managing coexistence between sidelink transmissions over a first radio access technology (e.g. 5G) and sidelink transmissions over a second radio access technology (e.g. LTE);
Fig. 8 shows a schematic representation of a non-volatile memory medium storing instructions which when executed by a processor allow a processor to perform one or more of the steps of the methods of any of Fig. 5 to Fig. 7.

### Detailed Description of the Figures

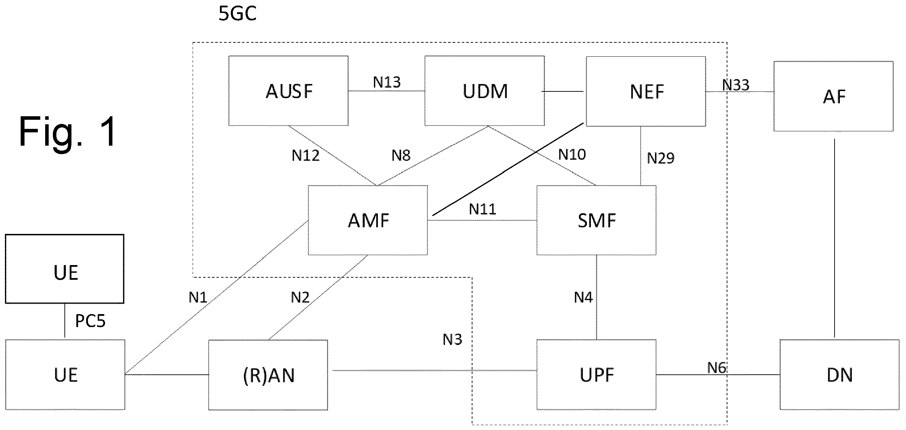

In the following, certain embodiments are explained with reference to mobile communication devices capable of communication via a wireless cellular system and mobile communication systems serving such mobile communication devices. Before explaining in detail the exemplifying embodiments, certain general principles of a wireless communication system, access systems thereof, and -+mobile communication devices are briefly explained with reference to Fig. 1, Fig.2 and Fig.3 to assist in understanding the technology underlying the described examples.

FIG. 1 shows a schematic representation of a 5G system (5GS). The 5GS may comprises user equipments (UEs), a (radio) access network ((R)AN), a 5G core network (5GC), one or more application functions (AF) and one or more data networks (DN).

The 5G (R)AN may comprise one or more gNodeB (gNB) distributed unit functions connected to one or more gNodeB (gNB) centralized unit functions.

The 5GC may comprise an access and mobility management function (AMF), a session management function (SMF), an authentication server function (AUSF), a user data management (UDM), a user plane function (UPF), a network exposure function (NEF), a unified data repository (UDR), an application function (AF) and/or a location management function (LMF).

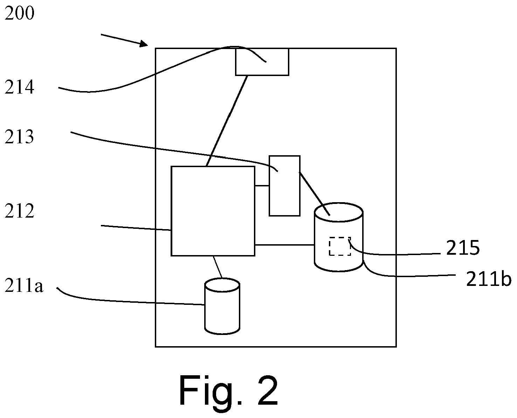

Fig. 2 illustrates an example of a control apparatus 200 for controlling a function of the (R)AN or the 5GC as illustrated on Fig. 1. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the 5G (R)AN or the 5GC. In some embodiments, each function of the (R)AN or the 5GC comprises a control apparatus 200. In alternative embodiments, two or more functions of the (R)AN or the 5GC may share a control apparatus.

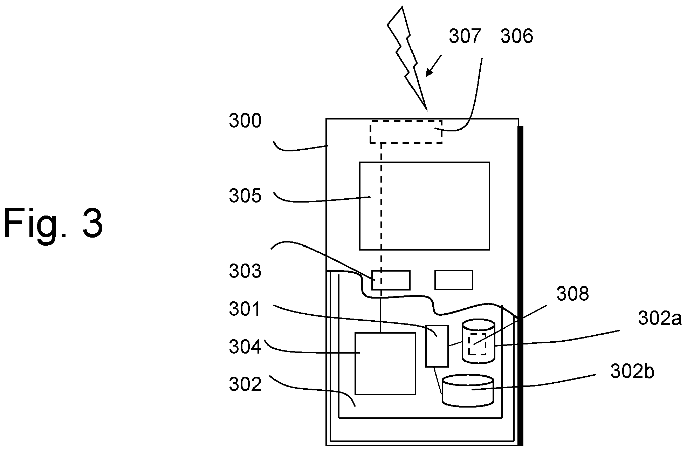

Fig. 3 illustrates an example of a UE 300, such as the UE illustrated on Fig. 1. The UE 300 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, a Cellular Internet of things (CloT) device or any combinations of these or the like. The UE 300 may provide, for example, communication of data for carrying communications. The communications may be one or more of voice, electronic mail (email), text message, multimedia, data, machine data and so on.

The UE 300 may receive signals over an air or radio interface 307 via appropriate apparatus for receiving and may transmit signals via appropriate apparatus for transmitting radio signals. In Fig. 3 transceiver apparatus is designated schematically by block 306. The transceiver apparatus 306 may be provided for example by means of a radio part and associated antenna arrangement. The antenna arrangement may be arranged internally or externally to the mobile device.

The UE 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a.

The processor, storage and other relevant control apparatus can be provided on an appropriate circuit board and/or in chipsets. This feature is denoted by reference 304. The device may optionally have a user interface such as keypad 305, touch sensitive screen or pad, combinations thereof or the like. Optionally one or more of a display, a speaker and a microphone may be provided depending on the type of the device.

One or more aspects of this disclosure relate to managing coexistence between sidelink transmissions over a first radio access technology (RAT) (e.g. 5G) and sidelink transmissions over a second radio access technology (e.g. LTE).

It will be understood that although the following aspects are discussed in the context of a 5G and LTE, one or more of these concepts may be applied to other radio access technologies.

It has been agreed that 5G UEs and LTE UEs may dynamically share a pool of resources in FR1 (i.e. below 7.125 GHz) to perform sidelink transmissions. The 5G UEs may operate with a subcarrier spacing (SCS) equal to 15kHz or 30kHz. The LTE UEs may operate with a SCS equal to 15kHz.

When a 5G TX UE performs sidelink transmissions toward a 5G RX UE with a SCS equal to 30kHz and an LTE TX UE performs sidelink transmissions toward an LTE RX UE with a SCS equal to 15kHz, consecutive slot 1 and slot 2 selected by the 5G TX UE to perform sidelink transmissions toward the 5G RX UE may fully overlap (in time but not necessarily in frequency) with a subframe selected by the LTE TX UE to perform sidelink transmissions toward the LTE RX UE.

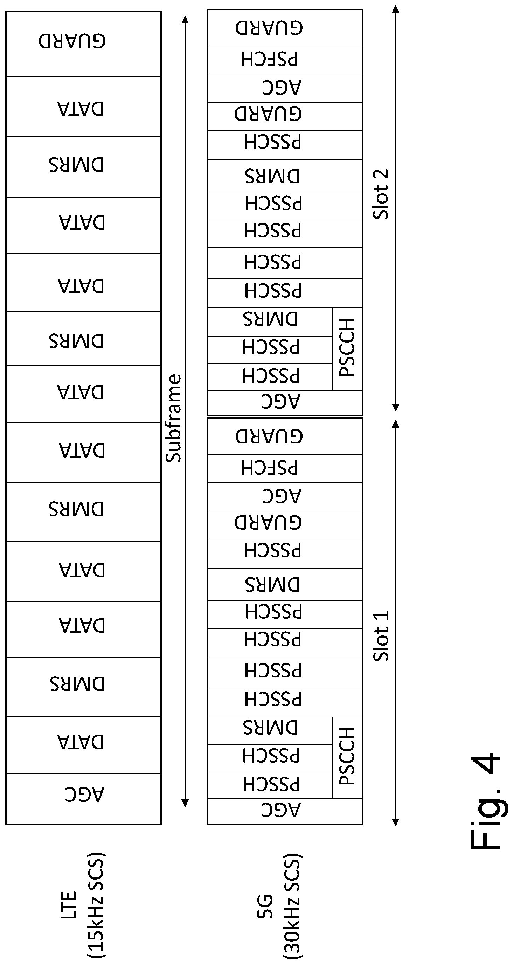

Fig. 4 shows a subframe selected by a LTE TX UE to perform sidelink transmissions toward a LTE RX UE and consecutive slot 1 and slot 2 selected by a 5G TX UE to perform sidelink transmissions toward a 5G RX UE. The consecutive slot 1 and slot 2 may fully overlap (in time but not necessarily in frequency) with the subframe.

The LTE RX UE may receive the subframe. The LTE RX UE may perform automatic gain control (AGC) in the first symbol of the subframe. AGC may ensure that a required signal to noise ratio (SNR) is met so that the subframe may be decoded by the LTE RX UE. For example, if the received signal power is too weak, AGC may adjust a gain in order to boost the received signal power and meet the required SNR. Likewise, if the received signal power is too strong, AGC may adjust a gain in order to attenuate the received signal power and meet the required signal SNR.

If the 5G TX UE is allowed to not transmit a transport block (TB) in the slot 1 and to transmit a TB in the slot 2, the received signal power at the LTE RX UE may increase in the middle of the subframe. This may cause AGC saturation.

If the 5G TX UE is allowed to transmit a TB in the slot 1 and to transmit a TB in the slot 2 and a transmission power in the slot 1 is lower than the transmission power in the slot 2, the received signal power at the LTE RX UE may increase. This may cause AGC saturation as well.

To avoid AGC saturation, the slot 1 and the slot 2 may be associated with at least one transmission requirement: (i) transmitting over the slot 2 is allowed if transmitting over the slot; or (ii) transmitting over the slot 2 is allowed if the transmission power over the slot 2 is lower than or equal to the transmission power over the slot 1.

An objective may then be to configure the 5G TX UE to efficiently transmit TBs over the slot 1 and the slot 2 based on the at least one transmission requirements.

One or more aspects of this disclosure proposes a solution to achieve this objective.

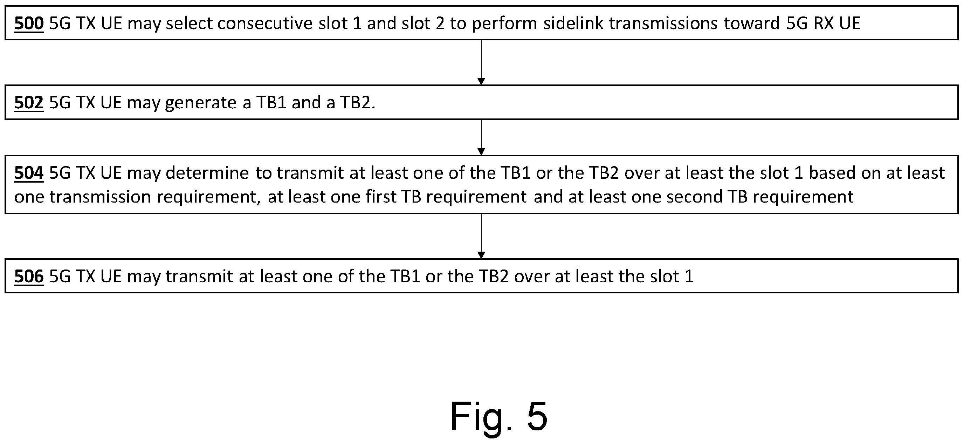

Fig. 5 shows a block diagram of a method for managing coexistence between sidelink transmissions from a 5G TX UE to a 5G RX UE and sidelink transmissions from an LTE TX UE to an LTE RX UE.

In step 500, the 5G TX UE may select consecutive slot 1 and slot 2 to perform sidelink transmissions toward the 5G RX UE. The slot 1 and the slot 2 may fully overlap (in time but not necessarily in frequency) with a subframe selected by the LTE TX UE to perform sidelink transmissions toward the LTE RX UE.

In step 502, the 5G TX UE may generate a TB1 and a TB2. The TB1 and the TB2 may be generated for a same service or for different services. A service may refer to a connection or traffic flow between a (layer 2) source identifier and a (layer 2) destination identifier.

The TB1 may be associated with at least one first TB requirement. The TB2 may be associated with at least one second TB requirement.

The at least one first TB requirement may comprise at least one of a first casting requirement, a first priority requirement, a first reliability requirement, a first transmission power requirement, a first latency requirement or a first amount of data available requirement. The at least one second TB requirement may comprise at least one of a second casting requirement, a second priority requirement, a second reliability requirement, a second transmission power requirement, a second latency requirement or a second amount of data available requirement. The at least one first TB requirement and the at least one second TB requirement may comprise a same TB requirements or different TB requirements.

A casting requirement may comprise a groupcast requirement, a broadcast requirement or a unicast requirement.

A priority requirement may comprise a high priority requirement, a medium priority requirement or a low priority requirement. A priority requirement may comprise an amount of data available requirement. An amount of data available requirement may comprise a high amount of data available requirement, a medium amount of data available requirement or a low amount of data available requirement.

A reliability requirement may comprise a high reliability requirement, a medium reliability requirement or a low reliability requirement.

A latency requirement may comprise a high latency requirement, a medium latency requirement or a low latency requirement. A latency requirement may comprise a remaining packet delay budget requirement. A remaining packet delay budget requirement may comprise a high remaining packet delay budget requirement, a medium remaining packet delay budget requirement or a low remaining packet delay budget requirement.

A transmission power requirement may comprise a high transmission power requirement, a medium transmission power requirement or a low transmission power requirement. A transmission power requirement may comprise a transmission power above a transmission power threshold requirement or a transmission power below a transmission power threshold requirement. A transmission power requirement may comprise a (semi)-static requirement or a dynamic requirement.

It will be understood that a TB may be associated with one or more than one TB requirement. For example, a TB may be associated with a groupcast requirement and a (semi)-static high transmission power requirement. A TB may be associated with a broadcast requirement and a (semi)-static high transmission power requirement. A TB may be associated with a unicast requirement and a dynamic transmission power requirement.

In step 504, the 5G TX UE may determine to transmit at least one of the TB1 or the TB2 over at least the slot 1 based on the at least one transmission requirement, the at least one first TB requirement and the at least one second TB requirement.

In step 506, the 5G TX UE may transmit at least one of the TB1 or the TB2 over at least the slot 1.

In an implementation, the 5G TX UE may generate the TB1 and the TB2. The TB1 may be associated with a first priority requirement and the TB2 may associated with a second priority requirement. The first priority requirement may be greater than the second priority requirement. The first priority requirement may be determined based on the lowest priority of a data packet comprised in the TB1. The second priority requirement may be determined based on the greatest priority of a data packet comprised in the second transport block.

The 5G TX UE may determine a congestion over the slot 1 and the slot 2. For example, the 5G TX UE may determine a channel busy ratio over the slot 1 and the slot 2.

The 5G TX UE may determine that the congestion over the slot 1 and the slot 2 is lower than a first congestion threshold corresponding to the first priority requirement (which implies that the TB1 may be transmitted) and greater than a second congestion threshold corresponding to the second priority requirement (which implies that the TB2 is to be dropped).

Alternatively, the 5G TX UE may determine that the congestion over the slot 1 and the slot 2 is lower than the first congestion threshold corresponding to the first priority requirement (which implies that the TB1 may be transmitted) and greater than a congestion threshold lower than the second congestion threshold corresponding to the second priority requirement (which implies that that the TB2 is not be dropped but the probability that the TB2 is about to be dropped is significant).

The 5G TX UE may determine to not transmit the TB2 over the slot 1 or the slot 2 based on the at least one transmission requirement, the first priority requirement, the second priority requirement and the congestion over the first slot and the second slot.

The 5G TX UE may determine to transmit the TB1 over the slot 1 based on the at least one transmission requirement, the first priority requirement, the second priority requirement and the congestion over the first slot and the second slot. Alternatively, the 5G TX UE may determine to transmit the TB1 over the slot 1 and the slot 2 (i.e. transmit the TB1 over the slot1 and retransmit or duplicate the TB1 over the slot 2) based on the at least one transmission requirement, the first priority requirement, the second priority requirement and the congestion over the first slot and the second slot.

The 5G TX UE may transmit the TB1 over the slot 1. Alternatively, the 5G TX UE may transmit the TB1 over the slot 1 and the slot 2 (i.e. transmit the TB1 over the slot 1 and retransmit or duplicate the TB1 over the slot 2).

In an implementation, the 5G TX UE may generate the TB1 and the TB2. The TB1 may be associated with a first transmission power requirement and the TB2 may associated with a second transmission power requirement. The second transmission power requirement may be lower than the first transmission power requirement.

The 5G TX UE may determine to transmit the TB1 over the slot 1 and to transmit the TB2 over the slot 2 based on the at least one transmission requirement, the first transmission power requirement and the second transmission power requirement.

The 5G TX UE may transmit the TB1 over the slot 1 and may transmit the TB2 over the slot 2.

In an implementation, the 5G TX UE may generate the TB1 and the TB2. The TB1 may be associated with a first transmission power requirement and a first remaining packet delay budget requirement and the TB2 may associated with a second transmission power requirement and a second remaining packet delay budget requirement. The second transmission power requirement may be lower than the first transmission power requirement. The second remaining packet delay budget requirement may be lower than the first remaining packet delay budget requirement.

The 5G TX UE may determine to transmit the TB2 over the slot 1 and the slot 2 (i.e. transmit the TB2 over the slot 1 and retransmit or duplicate the TB2 over the slot 2) based on the transmission requirement, the first transmission power requirement, the second transmission power requirement, the first remaining packet delay budget requirement and the second remaining packet delay budget requirement.

The 5G TX UE may transmit the TB2 over the slot 1 and the slot 2.

In an implementation, the 5G TX UE may generate the TB1 and the TB2. The TB1 may be associated with a first transmission power requirement and a first amount of data available requirement and the TB2 may associated with a second transmission power requirement and a second amount of data available requirement. The second transmission power requirement may be lower than the first transmission power requirement. The second amount of data available requirement may be greater than the first amount of data available requirement.

The 5G TX UE may determine to transmit the TB2 over the slot 1 and the slot 2 (i.e. transmit the TB2 over the slot 1 and retransmit or duplicate the TB2 over the slot 2) based on the at least one transmission requirement, the first transmission power requirement, the second transmission power requirement, the first amount of data available requirement and the second amount of data available requirement.

The 5G TX UE may transmit the TB2 over the slot 1 and the slot 2.

In an implementation, the 5G TX UE may generate the TB1 and the TB2. The TB1 may be associated with a first casting requirement and the TB2 may associated with a second casting requirement. The first casting requirement may be a groupcast requirement or a broadcast requirement, which may imply a (semi)-static high transmission power requirement because groupcast or broadcast may not allow dynamic power control. The second casting requirement may be a unicast requirement, which may imply a dynamic transmission power requirement because unicast may allow dynamic power control.

The 5G TX UE may determine to transmit the TB1 over the slot 1 and to transmit the TB2 over the slot 2 based on the at least one transmission requirement, the first casting requirement and the second casting requirement.

The 5G TX UE may transmit the TB1 over the slot 1 and may transmit the TB2 over the slot 2.

In an implementation, the 5G TX UE may generate the TB1 and the TB2. The TB1 may be associated with a first casting requirement and a first remaining packet delay budget requirement and the TB2 may associated with a second casting requirement and a second remaining packet delay budget requirement. The first casting requirement may be a groupcast requirement or a broadcast requirement, which may imply a (semi)-static high transmission power requirement because groupcast or broadcast may not allow dynamic power control. The second casting requirement may be a unicast requirement, which may imply a dynamic transmission power requirement because unicast may allow dynamic power control. The second remaining packet delay budget requirement may be lower than the first remaining packet delay budget requirement.

The 5G TX UE may determine to transmit the TB2 over the slot 1 and the slot 2 (i.e. transmit the TB2 over the slot 1 and retransmit or duplicate the TB2 over the slot 2) based on the at least one transmission requirement, the first casting requirement, the second casting requirement, the first remaining packet delay budget requirement and the second remaining packet delay budget requirement.

The 5G TX UE may transmit the TB2 over the slot 1 and the slot 2.

In an implementation, the 5G TX UE may generate the TB1 and the TB2. The TB1 may be associated with a first casting requirement and a first amount of data available requirement and the TB2 may associated with a second casting requirement and a second amount of data available requirement. The first casting requirement may be a groupcast requirement or a broadcast requirement, which may imply a (semi)-static high transmission power requirement because groupcast or broadcast may not allow dynamic power control. The second casting requirement may be a unicast requirement, which may imply a dynamic transmission power requirement because unicast may allow dynamic power control. The second amount of data available may be greater than the first amount of data available requirement.

The 5G TX UE may determine to transmit the TB2 over the slot 1 and the slot 2 (i.e. transmit the TB2 over the slot 1 and retransmit or duplicate the TB2 over the slot 2) based on the at least one transmission requirement, the first casting requirement, the second casting requirement, the first amount of data available requirement and the second amount of data available requirement.

The 5G TX UE may transmit the TB2 over the slot 1 and the slot 2.

In an implementation, the 5G TX UE may generate the TB1 and the TB2. The TB1 may be associated with a first TB requirement. The TB2 may be associated with a second TB requirement.

The 5G TX UE may determine to not transmit the TB2 based on the at least one transmission requirement, the first TB requirement and the second TB requirement.

The 5G TX UE may determine to transmit the TB1 over the slot 1 and the slot 2 (i.e. transmit the TB1 over the slot 1 and retransmit or duplicate the TB1 over the slot 2) based on the at least one transmission requirement and the first transmission power requirement.

The 5G TX UE may transmit the TB1 over the slot 1 and the slot 2 (i.e. transmit the TB1 over the slot 1 and retransmit or duplicate the TB1 over the slot 2).

In an implementation, the 5G TX UE may generate the TB1 and the TB2. The TB1 may be associated with a first transmission power requirement. The first transmission power requirement may be greater than a transmission power threshold.

The 5G TX UE may determine to transmit the TB1 over the slot 1 and the slot 2 (i.e. transmit the TB1 over the slot 1 and retransmit or duplicate the TB1 over the slot 2) based on the at least one transmission requirement and the first transmission power requirement.

The 5G TX UE may transmit the TB1 over the slot 1 and the slot 2 (i.e. transmit the TB1 over the slot 1 and retransmit or duplicate the TB1 over the slot 2).

In an implementation, the 5G TX UE may generate the TB1 and the TB2. The TB1 may be associated with a first transmission power requirement and a first casting requirement. The first transmission power requirement may be a transmission power greater than a transmission power threshold. The first casting requirement may be a unicast requirement.

The 5G TX UE may determine to transmit the TB1 over the slot 1 and the slot 2 (i.e. transmit the TB1 over the slot 1 and retransmit or duplicate the TB1 over the slot 2) based on the at least one transmission requirement, the first transmission power requirement and the first casting requirement.

The 5G TX UE may transmit the TB1 over the slot 1 and the slot 2 (i.e. transmit the TB1 over the slot 1 and retransmit or duplicate the TB1 over the slot 2).

In an implementation, the 5G TX UE may generate the TB1 and the TB2. The TB1 may be associated with a first casting requirement. The first casting requirement may be a unicast requirement.

The 5G TX UE may determine to transmit the TB1 over the slot 1 and the slot 2 (i.e. transmit the TB1 over the slot 1 and retransmit or duplicate the TB1 over the slot 2) based on the at least one transmission requirement and the first casting requirement.

The 5G TX UE may transmit the TB1 over the slot 1 and the slot 2 (i.e. transmit the TB1 over the slot 1 and retransmit or duplicate the TB1 over the slot 2).

In an implementation, the 5G TX UE may transmit the TB1 over the slot 1 and may not transmit the TB2 over the slot 2..

In an implementation, the 5G TX UE may transmit the TB2 over the slot 1 and may not transmit the TB1 over the slot 2.

In an implementation, the 5G TX UE may transmit a TB (e.g. TB1 or TB2) over the slot 1 and the slot 2 (i.e. transmit the TB over the slot 1 and retransmit or duplicate the TB over the slot 2). Such implementation may enable enhance reliability, in particular when channel conditions over the slot 1 and the slot 2 are lower than a channel conditions threshold. In such implementation, three options may be contemplated.

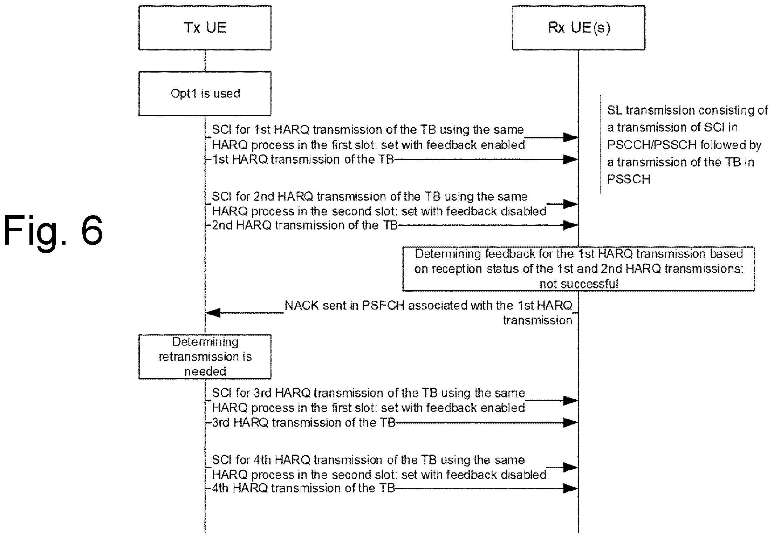

In a first option (illustrated in Fig. 6), the 5G TX UE may use a same HARQ process to transmit the TB over the slot 1 and the slot 2, HARQ with feedback is enabled for the transmission of the TB over the slot 1 and HARQ with feedback is disabled for the transmission of the TB over the slot 2.

The 5G TX UE may transmit an indication that HARQ with feedback is enabled for the transmission of the TB over the slot 1. The feedback may be determined by the 5G RX UE based on a reception status (e.g. successful or not successful) of the transmission of the TB over the slot 1 and the slot 2. The indication that HARQ with feedback is enabled for the transmission of the TB over the slot 1 may be transmitted in a second stage of sidelink control information (SCI) (as opposed to a first stage of SCI). The first stage of SCI may be transmitted over a physical sidelink control channel (PSCCH). The second stage of SCI may be transmitted over a physical sidelink shared channel (PSSCH). The feedback may be received on a resource of the PSFCH associated with the slot 1.

The 5G TX UE may transmit the TB over the slot 1 using a HARQ process. The TB may be transmitted over the PSSCH.

The 5G TX UE may transmit an indication that HARQ with feedback is disabled for the transmission of the TB over the slot 2. The indication that HARQ with feedback is disabled for the transmission of the TB over the slot 2 may be transmitted in the second stage of SCI. The second stage of SCI may be transmitted over the PSSCH.

The 5G TX UE may transmit the TB over the slot 2 using the same HARQ process. The TB may be transmitted over the PSSCH.

The 5G RX UE may determine a reception status (e.g. not successful) of the transmission of the TB over the slot 1 and the transmission of the TB over the slot 2. The reception status may be `successful' if the 5G RX UE can decode the TB transmitted over the slot 1 or the TB transmitted over the slot 2 (no error). The reception status may be 'not successful' if the 5G RX UE cannot decode the TB transmitted over the slot 1 or the TB transmitted over the slot 2 (error). The 5G RX UE may determine a feedback (e.g. NACK) based on the reception status.

The 5G TX UE may receive the feedback (e.g. NACK) for the transmission of the TB over the slot 1.

The 5G TX UE may determine to retransmit the TB over the slot 1 and the slot 2. It is noted that retransmission of the TB over the slot 2 may be performed as long as retransmission of the TB over the slot 1 is performed.

The 5G TX UE may transmit an indication that HARQ with feedback is enabled for the transmission of the TB over the slot 1.

The 5G TX UE may transmit the TB over the slot 1 using the same HARQ process. The TB may be transmitted over the PSSCH.

The 5G TX UE may transmit an indication that HARQ with feedback is disabled for the transmission of the TB over the slot 2.

The 5G TX UE may transmit the TB over the slot 2 using the same HARQ process.

The 5G TX UE may stop the HARQ process in response to receiving an ACK for the transmission of the TB over the slot 1 and the slot 2.

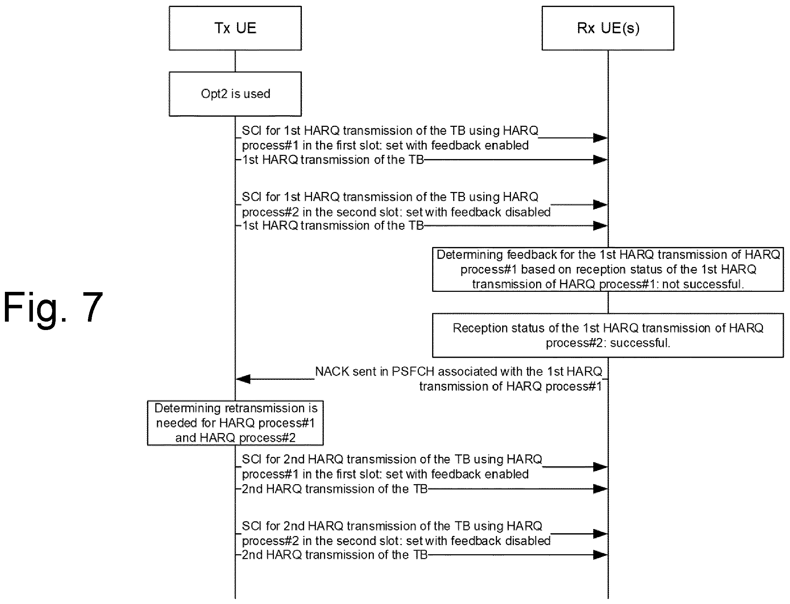

In a second option (illustrated in Fig. 7), the 5G TX UE may use different HARQ processes to transmit the TB over the slot 1 and the slot 2, HARQ with feedback is enabled for the transmission of the TB over the slot 1 and HARQ with feedback is disabled for the transmission of the TB over the slot 2.

The 5G TX UE may transmit an indication that HARQ with feedback is enabled for the transmission of the TB over the slot 1. The feedback may be determined by the 5G RX UE based on a reception status (e.g. successful or not successful) of the transmission of the TB over the slot 1. The indication that HARQ with feedback is enabled for the transmission of the TB over the slot 1 may be transmitted in a second stage of SCI (as opposed to a first stage of SCI). The second stage of SCI may be transmitted over the PSSCH. The feedback may be received on a resource of the PSFCH associated with the slot 1.

The 5G TX UE may transmit the TB over the slot 1 using a first HARQ process. The TB may be transmitted over the PSSCH.

The 5G TX UE may transmit an indication that HARQ with feedback is disabled for the transmission of the TB over the slot 2. The indication that HARQ with feedback is disabled for the transmission of the TB over the slot 2 may be transmitted in the second stage of SCI (as opposed to a first stage of SCI). The second stage of SCI may be transmitted over the PSSCH.

The 5G TX UE may transmit the TB over the slot 2 using a second HARQ process. The TB may be transmitted over the PSSCH.

The 5G RX UE may determine a reception status (e.g. not successful) of the transmission of the TB over the slot 1. The 5G RX UE may determine a feedback (e.g. NACK) based on the reception status.

The 5G RX UE may determine a reception status (e.g. successful) of the transmission of the TB over the slot 2. The 5G RX UE may not determine a feedback (e.g. ACK) based on the reception status.

The 5G TX UE may receive the feedback (e.g. NACK) for the transmission of the TB over the slot 1.

The 5G TX UE may determine to retransmit the TB over the slot 1 and the slot 2. It is noted that retransmission of the TB over the slot 2 may be performed as long as retransmission of the TB over the slot 1 is performed.

The 5G TX UE may transmit an indication that HARQ with feedback is enabled for the transmission of the TB over the slot 1.

The 5G TX UE may transmit the TB over the slot 1 using the first HARQ process. The TB may be transmitted over the PSSCH.

The 5G TX UE may transmit an indication that HARQ with feedback is disabled for the transmission of the TB over the slot 2.

The 5G TX UE may transmit the TB over the slot 2 using the second HARQ process.

The 5G TX UE may stop the first HARQ process in response to receiving an ACK for the transmission of the TB over the slot 1 or in response to the second HARQ process being stopped (whichever happens the earliest).

The 5G TX UE may stop the second HARQ process in response to the first HARQ process being stopped or in response to reaching a (pre)configured number of retransmissions for the second HARQ process (whichever happens the earliest). It is noted that the (pre)configured number of retransmissions is applied for a HARQ process with feedback disabled in general and the retransmissions therein are also referred to as blind retransmissions or blind repetitions.

In a third option (not illustrated), the 5G TX UE may use different HARQ processes to transmit the TB over the slot 1 and the slot 2, HARQ with feedback is enabled for the transmission of the TB over the slot 1 and HARQ with feedback is enabled for the transmission of the TB over the slot 2.

The 5G TX UE may transmit an indication that HARQ with feedback is enabled for the transmission of the TB over the slot 1. The feedback may be determined by the 5G RX UE based on a reception status (e.g. successful or not successful) of the transmission of the TB over the slot 1. The indication that HARQ with feedback is enabled for the transmission of the TB over the slot 1 may be transmitted in a second stage of SCI (as opposed to a first stage of SCI). The second stage of SCI may be transmitted over the PSSCH. The feedback may be received on a resource of the PSFCH associated with the slot 1.

The 5G TX UE may transmit the TB over the slot 1 using a first HARQ process. The TB may be transmitted over the PSSCH.

The 5G TX UE may transmit an indication that HARQ with feedback is enabled for the transmission of the TB over the slot 2. The feedback may be determined by the 5G RX UE based on a reception status (e.g. successful or not successful) of the transmission of the TB over the slot 2. The indication that HARQ with feedback is enabled for the transmission of the TB over the slot 2 may be transmitted in the second stage of SCI (as opposed to a first stage of SCI). The second stage of SCI may be transmitted over the PSSCH). The feedback may be received on a resource of the PSFCH associated with the slot 2.

The 5G TX UE may transmit the TB over the slot 2 using a second HARQ process. The TB may be transmitted over the PSSCH.

The 5G RX UE may determine a reception status (e.g. not successful) of the transmission of the TB over the slot 1. The 5G RX UE may determine a feedback (e.g. NACK) based on the reception status.

The 5G RX UE may determine a reception status (e.g. successful) of the transmission of the TB over the slot 2. The 5G RX UE may determine a feedback (e.g. ACK) based on the reception status.

The 5G TX UE may receive the feedback (e.g. NACK) for the transmission of the TB over the slot 1.

The 5G TX UE may receive the feedback (e.g. ACK) for the transmission of the TB over the slot 2.

The 5G TX UE may determine to stop both the first HARQ process and the second HARQ process based on the ACK feedback received from the second HARQ process. It is noted that the 5G TX UE may determine to retransmit the TB over the slot 1 and slot 2 if the NACK feedback is received from both the first HARQ process and the second HARQ process. The 5G TX UE may determine to stop both the first HARQ process and the second HARQ process if the ACK feedback is received from either the first HARQ process or the second HARQ process.

The 5G TX UE may stop the first HARQ process in response to receiving an ACK for the transmission of the TB over the slot 1 or in response to the second HARQ process being stopped (whichever happens the earliest).

The 5G TX UE may stop second first HARQ process in response to receiving an ACK for the transmission of the TB over the slot 2 or in response to the first HARQ process being stopped (whichever happens the earliest).

It may be noted that in the second option and the third option, the use of different HARQ processes to transmit the TB over the slot 1 and the slot 2 may cause duplication to the RX UE at radio link control (RLC) or packet data convergence protocol (PDCP) level. However, RLC or PDCP may be able to detect and discard duplicated packets. It may be further noted that RLC packet data unit (PDU) in un-acknowledgement mode (UM) may be without sequence number (SN) and in this case detection of duplication and discarding at RLC level may be not feasible but may be feasible at PDCP level.

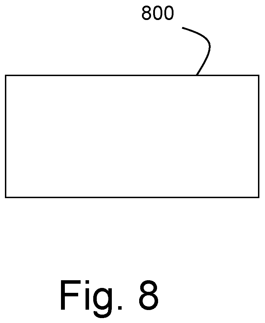

Fig. 8 shows a schematic representation of non-volatile memory media 800 storing instructions which when executed by a processor allow the processor to perform one or more of the steps of the methods of any of Fig. 5 to Fig. 7.

It is noted that while the above describes example embodiments, there are several variations and modifications which may be made to the disclosed solution without departing from the scope of the present invention.

It will be understood that although the above concepts have been discussed in the context of a 5G and LTE, one or more of these concepts may be applied to other radio access technologies.

The embodiments may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments may be implemented by computer software stored in a memory and executable by at least one data processor of the involved entities or by hardware, or by a combination of software and hardware. Further in this regard it should be noted that any procedures, e.g., as in Fig. 5 to Fig. 7, may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Alternatively or additionally some embodiments may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:
(a) hardware-only circuit implementations (such as implementations in only analogue and/or digital circuitry);
(b) combinations of hardware circuits and software, such as:
   (i) a combination of analogue and/or digital hardware circuit(s) with software/firmware and
   (ii) any portions of hardware processor(s) with software (including digital signal processor(s)), software, and memory(ies) that work together to cause an apparatus, such as the communications device or base station to perform the various functions previously described; and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of exemplary and non-limiting examples a full and informative description of some embodiments However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

## Claims

1. An apparatus comprising:
means for selecting a first slot and a second slot for sidelink transmissions via a first radio access technology, wherein the first slot and the second slot overlap with a subframe for sidelink transmissions via a second radio access technology, wherein the first slot and the second slot are associated with at least one transmission requirement;
means for generating a first transport block associated with at least one first transport block requirement and a second transport block associated with at least one second transport block requirement;
means for determining to transmit at least one of the first transport block or the second transport block over at least the first slot based on the at least one transmission requirement, the at least one first transport block requirement and the at least one second transport block requirement; and
means for transmitting at least one of the first transport block or the second transport block over at least the first slot.

2. The apparatus of claim 1, wherein the at least one transmission requirement comprises at least one of:
transmitting over the second slot is allowed if transmitting over the first slot; or
transmitting over the second slot is allowed if a transmission power over the second slot is lower than or equal to a transmission power over the first slot.

3. The apparatus of claim 1 or claim 2, wherein the at least one first transport block requirement comprises at least one of a first casting requirement, a first priority requirement, a first reliability requirement, a first transmission power requirement or a first latency requirement; and
wherein the at least one second transport block requirement comprises at least one of a second casting requirement, a second priority requirement, a second reliability requirement, a second transmission power requirement or a second latency requirement.

4. The apparatus of any of claims 1 to 3, wherein the first transport block and the second transport block are generated for a same service or for different services.

5. The apparatus of any of claims 1 to 4, further comprising :
means for generating a first transport block associated with a first priority requirement and a second transport block associated with a second priority requirement, wherein the first priority requirement is greater than the second priority requirement;
means for determining congestion over the first slot and the second slot;
means for determining to transmit the first transport block over the first slot or over the first slot and the second slot based on the at least one transmission requirement, the first priority requirement, the second priority requirement and the congestion over the first slot and the second slot; and
means for transmitting the first transport block over the first slot or over the first slot and the second slot.

6. The apparatus of claim 5, further comprising:
means for determining that the congestion over the first slot and the second slot is lower than a congestion threshold and greater than another congestion threshold;
wherein, preferably, the congestion threshold is first threshold corresponding to the first priority requirement and the other congestion threshold is a second threshold corresponding to the second priority requirement.

7. The apparatus of any of claims 1 to 4, further comprising:
means for generating a first transport block associated with a first transmission power requirement and a second transport block associated with a second transmission power requirement, wherein the second transmission power requirement is lower than the first transmission power requirement;
means for determining to transmit the first transport block over the first slot and the second transport block over the second slot based on the at least one transmission requirement, the first transmission power requirement and the second transmission power requirement; and
transmit the first transport block over the first slot and the second transport block over the second slot.

8. The apparatus of any of claims 1 to 4, further comprising:
means for generating a first transport block associated with a first casting requirement and a second transport block associated with a second casting requirement, wherein the first casting requirement is a groupcast requirement or a broadcast requirement and the second casting requirement is a unicast requirement;
means for determining to transmit the first transport block over the first slot and the second transport block over the second slot based on the at least one transmission requirement, the first casting requirement and the second casting requirement; and
means for transmitting the first transport block over the first slot and the second transport block over the second slot.

9. The apparatus of any of claims 1 to 4, further comprising:
means for generating a first transport block associated with a first transport block requirement and a second transport block associated with a second transport block requirement;
means for determining to not transmit the second transport block over the first slot or the second slot based on the at least one transmission requirement, the first transport block requirement and the second transport block requirement;
means for determining to transmit the first transport block over the first slot and the second slot based on the at least one transmission requirement, the first transport block requirement and the second transport block requirement; and
means for transmitting the first transport block over the first slot and the second slot.

10. The apparatus of any of claims 1 to 4, further comprising:
means for generating a first transport block associated with a first transmission power requirement greater than a transmission power threshold;
means for determining to transmit the first transport block over the first slot and the second slot based on the at least one transmission requirement and the first transmission power requirement; and
means for transmitting the first transport block over the first slot and the second slot.

11. The apparatus of any of claims 1 to 4, further comprising :
means for generating a first transport block associated with a first casting requirement, wherein the first casting requirement is a unicast requirement;
means for determining to transmit the first transport block over the first slot and the second slot based on the at least one transmission requirement and the first casting requirement; and
means for transmitting the first transport block over the first slot and the second slot.

12. The apparatus of any of claims 1 to 11, further comprising:
means for transmitting an indication that hybrid automatic repeat request with feedback is enabled for the transmission of the first transport block over the first slot, wherein the feedback is based on a reception status of the transmission of the first transport block over the first slot;
transmit the first transport block over the first slot using a hybrid automatic repeat request process;
transmit an indication that hybrid automatic repeat request with feedback is enabled for the transmission of the first transport block over the second slot, wherein the feedback is based on a reception status of the transmission of the first transport block over the second slot; and
transmit the first transport block over the second slot using another hybrid automatic repeat request process.

13. The apparatus of any of claims 1 to 11, further comprising:
means for transmitting an indication that hybrid automatic repeat request with feedback is enabled for the transmission of the first transport block over the first slot, wherein the feedback is based on a reception status of the transmission of the first transport block over the first slot;
means for transmitting the first transport block over the first slot using a hybrid automatic repeat request process;
means for transmitting an indication that hybrid automatic repeat request with feedback is disabled for the transmission of the first transport block over the second slot; and
means for transmitting the first transport block over the second slot using another hybrid automatic repeat request process.

14. The apparatus of any of claims 1 to 11, further comprising :
means for transmitting an indication that a hybrid automatic repeat request with feedback is enabled for the transmission of the first transport block over the first slot, wherein the feedback is based on a reception status of the transmission of the first transport block over the first slot and the transmission of the first transport block over the second slot;
means for transmitting the first transport block over the first slot using a hybrid automatic repeat request process;
means for transmitting an indication that hybrid automatic repeat request with feedback is disabled for the transmission of the first transport block over the second slot; and
means for transmitting the first transport block over the second slot using the same hybrid automatic repeat request process.

15. The apparatus of any of claims 1 to 14, wherein the apparatus is a user equipment.

16. A method comprising:
selecting a first slot and a second slot for sidelink transmissions via a first radio access technology, wherein the first slot and the second slot overlap with a subframe for sidelink transmissions via a second radio access technology, wherein the first slot and the second slot are associated with at least one transmission requirement;
generating a first transport block associated with at least one first transport block requirement and a second transport block associated with at least one second transport block requirement;
determining to transmit at least one of the first transport block or the second transport block over at least the first slot based on the at least one transmission requirement, the at least one first transport block requirement and the at least one second transport block requirement; and
transmitting at least one of the first transport block or the second transport block over at least the first slot.
